# EUROPEAN PATENT APPLICATION

(11) **EP 4 443 946 A1**
(43) Date of publication of application: **09.10.2024**
(21) Application number: 22914431.6
(22) Date of filing: 21.12.2022
(51) Int. Cl.: H04W 24/08

(54) **METHOD AND DEVICE USED IN WIRELESS COMMUNICATION**

(30) Priority: 31.12.2021 CN 202111664036
(71) Applicant: SHANGHAI LANGBO COMMUNICATION TECHNOLOGY COMPANY LIMITED, Shanghai 200240 (CN)
(72) Inventor: ZHANG, Jinfang, Shanghai 201206 (CN); ZHANG, Xiaobo, Shanghai 201206 (CN)
(74) Representative: Zhang, Fan
(86) International application number: PCT/CN2022/140566
(87) International publication number: WO 2023/125177

(57) **Abstract**

Disclosed in the present application are a method and device used in wireless communication. A first node is switched from an RRC inactive state to a first RRC state in response to any condition in a first condition set being satisfied; and when the first node receives data from a multicast MRB in the RRC inactive state, at least one first-type signal is received, and each of the at least one first-type signal comprises the data from the multicast MRB. The first condition set is related to whether the first node receives the data from the multicast MRB in the RRC inactive state. At least one first-type condition belongs to the first condition set only when the first node receives the data from the multicast MRB in the RRC inactive state. According to the present application, packet loss can be remarkably reduced.

## Description

### BACKGROUND

### TECHNICAL FIELD

The present application relates to methods and devices in wireless communication systems, and in particular to a method and device for supporting MBS transmission in RRC_INACTIVE state in wireless communications.

### RELATED ART

Radio Resource Control (RRC)_INACTIVE State is an RRC state newly introduced in NR. When a UE (User Equipment) enters RRC_INACTIVE state, the UE can retain part of the network configuration information. When a service arrives, the UE can perform data transmission by re-entering RRC_CONNECTED State. Until Rel- 16, data transmission in RRC_INACTIVE State is not supported in 3rd Generation Partner Project (3GPP) Radio Access Network (RAN).

Although the multicast/broadcast transmission feature is not supported in the earliest versions of 5G (Fifth Generation), i.e., Release 15 and Release 16, the one-to-many transmission feature of multicast/broadcast communications can significantly improve system performance and user experience in many important application scenarios, such as public safety and mission critical, V2X (Vehicle-to-Everything) applications, software delivery, and group communications. In order to support multicast/broadcast communications, 5G broadcast evolution was discussed between 3GPP RAN #78 plenary and RAN #80 plenary, and the Architecture Evolution Study Item (SI) for 5G broadcast services was adopted at SA (Service and System Aspects) #85 meeting. In order to support reliable MBS (multicast/broadcast service) transmission, in Rel-17, 3GPP conducted a study for MBS service transmission in RRC_CONNECTED state. In order to further save UE power consumption, 3GPP started to discuss supporting MBS in RRC_INACTIVE state in Rel-18.

### SUMMARY

Inventors have found through researches that when the UE monitors the deterioration of radio link quality while receiving MBS services in RRC_CONNECTED state, the UE can resume by re-establishing an RRC connection; when the UE monitors a deterioration in radio link quality while receiving MBS services in RRC_INACTIVE state, it is necessary to study how the UE transitions to RRC state. At the same time, since the UE is in a power-saving mode in RRC_INACTIVE state, how to monitor radio link quality also needs to be studied.

The present application discloses a solution that, when the UE supports MBS reception in RRC_INACTIVE state, it can transition to RRC state based on monitored radio link quality, which can reduce packet loss. Although the present application was originally intended for a Uu air interface, it can also be applied to a PC5 air interface. Additionally, the adoption of a unified solution for various scenarios, including but not limited to uplink communication scenarios, contributes to the reduction of hardware complexity and costs. If no conflict is incurred, embodiments in the first node in the present application and the characteristics of the embodiments are also applicable to any other node, and vice versa. And the embodiments in the present application and the characteristics in the embodiments can be arbitrarily combined if there is no conflict. Particularly, for interpretations of the terminology, nouns, functions and variants (if not specified) in the present application, refer to definitions given in TS36 series, TS38 series and TS37 series of 3GPP specifications.

The present application provides a method in a first node for wireless communications, comprising:
as a response to any condition in a first condition set being satisfied, transitioning from RRC_INACTIVE state to a first RRC state; and
when the first node receives data from a multicast MRB in the RRC_INACTIVE state, receiving at least one first-type signal, and each of the at least one first-type signal comprising the data from the multicast MRB;
herein, the first condition set is related to whether the first node receives the data from the multicast MRB in the RRC_INACTIVE state; there exists at least one first-type condition belonging to the first condition set only when the first node receives the data from the multicast MRB in the RRC_INACTIVE state.

In one embodiment, the first RRC state is RRC_CONNECTED state.

In one embodiment, the above method can significantly reduce packet loss by transitioning from RRC INACTIVE state to RRC_CONNECTED state.

In one embodiment, the first RRC state is RRC_IDLE state.

In one embodiment, the above method can reduce UE power consumption by transitioning from RRC INACTIVE state to RRC_IDLE state.

In one embodiment, in the above method, the first condition set is related to whether the first node receives the data from multicast MRB (MBS Radio Bearer) in the RRC_INACTIVE state, and different first condition sets can be designed to optimize network's support for different services.

According to one aspect of the present application, comprising:
one of the at least one first-type condition being that reception quality of an SSB indicated by a first SSB index is less than a first threshold;
herein, the first threshold is fixed, or the first threshold is explicitly indicated by a higher-layer signaling; each of the at least one first-type signal is used to indicate the first SSB index.

According to one aspect of the present application, comprising:
one of the at least one first-type condition being that a first timer expires at least once;
herein, an expiration of the first timer is used to indicate a detection of data reception failure from the multicast MRB; the first timer is maintained at an RLC sublayer of the first node.

According to one aspect of the present application, comprising:
one of the at least one first-type condition being that a value of a first counter is greater than a second threshold;
herein, when a first-type signal is newly transmitted and a TB (Transport Block) carried by a closest first-type signal before the first-type signal is successfully decoded, the value of the first counter is set to 0; when a first-type signal is newly transmitted and the TB carried by a closest first-type signal before the first-type signal is not successfully decoded, the value of the first counter is increased by 1.

According to one aspect of the present application, comprising:
the transitioning to a first RRC state comprises transmitting a second message, the second message being used to request resuming an RRC connection;
herein, the first RRC state is the RRC_CONNECTED state; a first RLC bearer associated with the multicast MRB is configured for small data transmission; the second message comprises an RLC control message, and the RLC control message is transmitted through the first RLC bearer.

In one embodiment, the above method can quickly indicate an RLC reception state to the network by reporting a Radio Link Control (RLC) control message while requesting resuming an RRC connection.

According to one aspect of the present application, comprising:
transmitting a third message in RRC_IDLE state, the third message being used to request establishing an RRC connection;
herein, the first RRC state is the RRC_IDLE state.

In one embodiment, after entering RRC_IDLE state, the above method can request to establish an RRC connection and reselect to enter RRC _CONNECTED state to continue receiving the data from the MRB.

According to one aspect of the present application, comprising:
receiving a first message, the first message being used to configure at least one radio bearer; as a response to receiving the first message, entering or maintaining the RRC _INACTIVE state;
herein, the at least one radio bearer comprises the multicast MRB.

The present application provides a first node for wireless communications, comprising:
a first transmitter, as a response to any condition in a first condition set being satisfied, transitioning from RRC_INACTIVE state to a first RRC state; and
a first receiver, when the first node receives data from a multicast MRB in the RRC_INACTIVE state, receiving at least one first-type signal, and each of the at least one first-type signal comprising the data from the multicast MRB;
herein, the first condition set is related to whether the first node receives the data from the multicast MRB in the RRC_INACTIVE state; there exists at least one first-type condition belonging to the first condition set only when the first node receives the data from the multicast MRB in the RRC_INACTIVE state.

The present application provides a method in a second node for wireless communications, comprising:
transmitting at least one first-type signal, each of the at least one first-type signal comprising data from a multicast MRB;
herein, as a response to any condition in a first condition set being satisfied, a first node transitions from RRC_INACTIVE state to a first RRC state; the first condition set is related to whether the first node receives the data from the multicast MRB in the RRC_INACTIVE state; there exists at least one first-type condition belonging to the first condition set only when the first node receives the data from the multicast MRB in the RRC_INACTIVE state.

According to one aspect of the present application, comprising:
one of the at least one first-type condition being that reception quality of an SSB indicated by a first SSB index is less than a first threshold;
herein, the first threshold is fixed, or the first threshold is explicitly indicated by a higher-layer signaling; each of the at least one first-type signal is used to indicate the first SSB index.

According to one aspect of the present application, comprising:
one of the at least one first-type condition being that a first timer expires at least once;
herein, an expiration of the first timer is used to indicate a detection of data reception failure from the multicast MRB; the first timer is maintained at an RLC sublayer of the first node.

According to one aspect of the present application, comprising:
one of the at least one first-type condition is that a value of a first counter being greater than a second threshold;
herein, when a first-type signal is newly transmitted and a TB carried by a closest first-type signal before the first-type signal is successfully decoded, the value of the first counter is set to 0; when a first-type signal is newly transmitted and the TB carried by a closest first-type signal before the first-type signal is not successfully decoded, the value of the first counter is increased by 1.

According to one aspect of the present application, comprising:
receiving a second message, the second message being used to request an RRC connection;
herein, the first RRC state is the RRC _CONNECTED state; a first RLC bearer associated with the multicast MRB is configured for small data transmission; the second message comprises an RLC control message, and the RLC control message is transmitted through the first RLC bearer.

According to one aspect of the present application, comprising:
receiving a third message, the third message being used to request establishing an RRC connection;
herein, the first RRC state is the RRC_IDLE state.

According to one aspect of the present application, comprising:
transmitting a first message, the first message being used to configure at least one radio bearer;
herein, as a response to receiving the first message, the first node enters or maintains the RRC_INACTIVE state; the at least one radio bearer comprises the multicast MRB.

The present application provides a second node for wireless communications, comprising:
a second transmitter, transmitting at least one first-type signal, each of the at least one first-type signal comprising data from a multicast MRB; herein, as a response to any condition in a first condition set being satisfied, a first node transitions from RRC_INACTIVE state to a first RRC state; the first condition set is related to whether the first node receives the data from the multicast MRB in the RRC_INACTIVE state; there exists at least one first-type condition belonging to the first condition set only when the first node receives the data from the multicast MRB in the RRC INACTIVE state.

### BRIEF DESCRIPTION OF THE DRAWINGS

Other features, objects and advantages of the present application will become more apparent from the detailed description of non-restrictive embodiments taken in conjunction with the following drawings:
FIG. 1 illustrates a flowchart of transmission of a first node according to one embodiment of the present application;
FIG. 2 illustrates a schematic diagram of a network architecture according to one embodiment of the present application;
FIG. 3 illustrates a schematic diagram of a radio protocol architecture of a user plane and a control plane according to one embodiment of the present application;
FIG. 4 illustrates a schematic diagram of hardware modules of a communication device according to one embodiment of the present application;
FIG. 5 illustrates a flowchart of radio signal transmission according to one embodiment of the present application;
FIG. 6 illustrates another flowchart of radio signal transmission according to one embodiment of the present application;
FIG. 7 illustrates a schematic diagram of an SSB index according to one embodiment of the present application;
FIG. 8 illustrates a schematic diagram of a first timer according to one embodiment of the present application;
FIG. 9 illustrates a schematic diagram of running of a first counter according to one embodiment of the present application;
FIG. 10 illustrates a schematic diagram of a multicast MRB and an RLC bearer associated with the multicast MRB according to one embodiment of the present application;
FIG. 11 illustrates a structure block diagram of a processor in a first node according to one embodiment of the present application;
FIG. 12 illustrates a structure block diagram of a processor in second node according to one embodiment of the present application.

### DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

### Embodiment 1

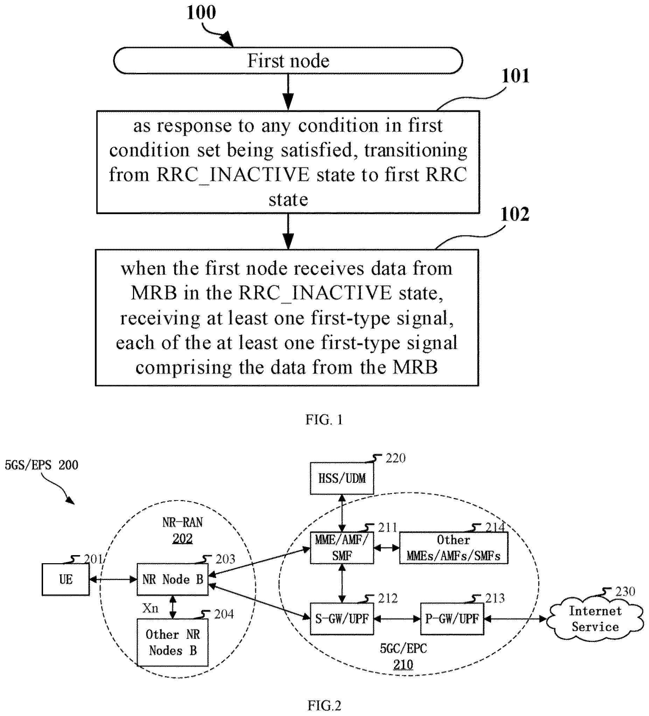

Embodiment 1 illustrates a flowchart of transmission of a first node according to one embodiment of the present application, as shown in FIG. 1.

In embodiment 1, a first node 100 in step 101, as a response to any condition in a first condition set being satisfied, transitions from RRC_INACTIVE state to a first RRC state; in step 102, when the first node receives data from a multicast MRB in the RRC_INACTIVE state, receives at least one first-type signal, and each of the at least one first-type signal comprises the data from the multicast MRB; herein, the first condition set is related to whether the first node receives the data from the multicast MRB in the RRC_INACTIVE state; there exists at least one first-type condition belonging to the first condition set only when the first node receives the data from the multicast MRB in the RRC INACTIVE state.

In one embodiment, as a response to any condition in a first condition set being satisfied, transition from RRC INACTIVE state to a first RRC state.

In one embodiment, the phrase of as a response to any condition in a first condition set being satisfied, transitioning from RRC _INACTIVE state to a first RRC state comprises: as a response to any condition in a first condition set being satisfied, determining first radio link failure; as a response to determining the first radio link failure, transitioning from RRC INACTIVE state to a first RRC state.

In one embodiment, the first radio link is a radio link between the first node and the second node in the present application.

In one embodiment, the first condition set comprises at least one condition.

In one embodiment, the first RRC state is one of RRC _CONNECTED state or RRC_IDLE state.

In on embodiment, the first condition set is related to whether the first node receives the data from the multicast MRB in the RRC INACTIVE state.

In on embodiment, when the first node does not receive data from a multicast MRB in the RRC_INACTIVE state, the first condition set is a first candidate condition set; when the first node receives the data from the multicast MRB in the RRC_INACTIVE state, the first condition set is a second candidate condition set.

In on embodiment, the first candidate condition set is a true subset of the second candidate condition set.

In on embodiment, the phrase that the first node does not receive the data from the multicast MRB in the RRC_INACTIVE state comprises: the first node only receives data transmitted through broadcast in the RRC_INACTIVE state.

In one subembodiment of the above embodiment, the first candidate condition set only comprises one condition that the first node selects a new PLMN (Public Land Mobile Network) or SNPN (Stand-alone Non-Public Network).

In on embodiment, the multicast MRB is a radio bearer configured for MBS (multicast/broadcast service) multicast transmission.

In on embodiment, the multicast MRB is identified by a multicast MRB-Identity.

In on embodiment, the multicast MRB is used for MBS transmission.

In on embodiment, a bearer type of the multicast MRB is one of a PTM-only multicast MRB, a PTP-only multicast MRB or a split multicast MRB.

In on embodiment, the phrase of receiving the data from the multicast MRB comprises: a received MAC (Medium Access Control) sub-PDU comprises an LCID (Logical Channel Identity), the LCID is used to identify an RLC bearer, and the RLC bearer is associated with a multicast MRB.

In one embodiment, a multicast MRB corresponds to an MBS session.

In one embodiment, one LCID corresponds to one multicast MRB, and one MBS session comprises at least one multicast MRB.

In one embodiment, when configuration of an RLC bearer is a lower layer part configuration of a radio bearer configuration, the RLC bearer is associated with the radio bearer.

In one embodiment, when configuration of an RLC bearer comprises RLC of a radio bearer and configuration of a logical channel, the RLC bearer is associated with the radio bearer.

In one embodiment, when a configuration message of an RLC bearer comprises a radio bearer identifier, the RLC bearer is associated with a radio bearer identified by the radio bearer identifier.

In one embodiment, when a servedMBS-RadioBearer field comprised in a configuration message of an RLC bearer indicates a radio bearer identifier, the RLC bearer is associated with a radio bearer identified by the radio bearer identifier.

In one embodiment, when a servedRadioBearer field comprised in a configuration message of an RLC bearer indicates a radio bearer identifier, the RLC bearer is associated with a radio bearer identified by the radio bearer identifier.

In one embodiment, when data belonging to a radio bearer is transmitted through an RLC bearer, the RLC bearer is associated with the radio bearer.

In one embodiment, when a PDCP (Packet Data Convergence Protocol) entity corresponding to a radio bearer is associated with an RLC entity corresponding to an RLC bearer, the RLC bearer is associated with the radio bearer.

In one embodiment, when a logical channel identified by a LCID and a PDCP entity corresponding to a radio bearer are associated, the RLC bearer is associated with the radio bearer.

In one embodiment, the data comprises a PDCP SDU (Service Data Unit).

In one embodiment, the data comprises a PDCP control PDU (Protocol Data Unit).

In one embodiment, the data comprises a PDCP data PDU.

In one embodiment, the data comprises an RLC SDU.

In one embodiment, the data comprises an RLC SDU segment.

In one embodiment, the data comprises an RLC data PDU.

In one embodiment, the data comprises an RLC control PDU.

In one embodiment, the data comprises at least one bit.

In one embodiment, the data comprises at least one byte.

In one embodiment, the first candidate condition set comprises at least one condition not belonging to the second candidate condition set.

In on embodiment, the phrase that the first node does not receive the data from the multicast MRB in the RRC_INACTIVE state comprises: the first node receives data from a DRB (Data Radio Bearer) in the RRC_INACTIVE state.

In one subembodiment of the above embodiment, when the first node only receives the data from the multicast MRB in the RRC_INACTIVE state, the first candidate condition set comprises at least one condition not belonging to the second candidate condition set.

In one subembodiment of the above embodiment, when the first node receives the data from the multicast MRB in the RRC _INACTIVE state and the first node receives the data from the DRB in the RRC_INACTIVE state, the first candidate condition set is a true subset of the second candidate condition set.

In one embodiment, one condition in the first condition set is that cell reselection occurs.

In one embodiment, one condition in the first condition set is that RLC of a Master Cell Group (MCG) indicates that a maximum number of retransmissions has been reached.

In one embodiment, one condition in the first condition set is that T319 timer expires.

In one embodiment, there exists at least one first-type condition belonging to the first condition set only when the first node receives the data from the multicast MRB in the RRC_INACTIVE state.

In one embodiment, there exists at least one second-type condition belonging to the first condition set only when the first node does not receive data from a multicast MRB in the RRC_INACTIVE state, and one of the at least one second-type condition is an expiration of a second timer.

In one subembodiment of the above embodiment, the first node is in an SDT (Small Data Transmission) procedure.

In one subembodiment of the above embodiment, the first node receives data from a DRB in the RRC_INACTIVE state.

In one embodiment, the second timer is used for an SDT procedure in the RRC_INACTIVE state.

In one embodiment, the second timer is used to monitor whether an SDT procedure fails in the RRC_INACTIVE state.

In one embodiment, the second timer is NewSDTtimer.

In one embodiment, the second timer is not T319.

In one embodiment, the second timer is not used to monitor whether an RRC connection resume procedure fails.

In one embodiment, the second timer starts when transmitting either RRCResumeRequest or RRCResumeRequest1.

In one embodiment, the second timer is maintained at RRC sublayer of the first node.

In one embodiment, the second timer is not used for the procedure of receiving the data from the MRB in the RRC_INACTIVE state.

In one embodiment, when the first node receives data from a multicast MRB in the RRC_INACTIVE state, receives at least one first-type signal, and each of the at least one first-type signal comprises the data from the multicast MRB.

In one embodiment, receive the at least one first-type signal through an air interface.

In one embodiment, the air interface is a NR air interface.

In one embodiment, the air interface is a Uu interface.

In one embodiment, the at least one first-type signal is a PDSCH (Physical Downlink Shared Channel).

In one embodiment, the at least one first-type signal comprises data transmitted through a MTCH (MBS Traffic Channel).

In one embodiment, the at least one first-type signal comprises data transmitted through a Dedicated Traffic Channel (DTCH).

In one embodiment, a transport block (TB) carried by each of the at least one first-type signal comprises the data from the multicast MRB.

In one embodiment, when the first node receives the data from the multicast MRB in the RRC_INACTIVE state, it receives at least one first-type signaling, and each first-type signaling in the at least one first-type signaling is used to schedule a first-type signal, and the first-type signal comprises the data from the multicast MRB.

In one embodiment, the first-type signaling is a physical-layer signaling.

In one embodiment, the first-type signaling is a PDCCH (Physical Downlink Control Channel).

In one embodiment, the first-type signaling is Downlink Control Information (DCI).

In one embodiment, the first-type signal is transmitted on pre-configured radio resources.

In one embodiment, the first-type signal is transmitted on dynamically-scheduled radio resources.

### Embodiment 2

Embodiment 2 illustrates a schematic diagram of a network architecture according to one embodiment of the present application, as shown in FIG. 2. FIG. 2 is a diagram illustrating a network architecture 200 of 5G NR, Long-Term Evolution (LTE), and Long-Term Evolution Advanced (LTE-A) systems. The NR 5G, LTE or LTE-A network architecture 200 may be called a 5G System(5GS)/Evolved Packet System (EPS) 200 or other appropriate terms. The 5GS/ EPS 200 may comprise one or more UEs 201, an NG-RAN 202, a 5G-Core Network/Evolved Packet Core (SGC/ EPC) 210, a Home Subscriber Server (HSS)/ Unified Data Management(UDM) 220 and an Internet Service 230. The 5GS/EPS 200 may be interconnected with other access networks. For simple description, the entities/interfaces are not shown. As shown in FIG. 2, the 5GS/EPS 200 provides packet switching services. Those skilled in the art will readily understand that various concepts presented throughout the present application can be extended to networks providing circuit switching services or other cellular networks. The NG-RAN 202 comprises an NR node B (gNB) 203 and other gNBs 204. The gNB 203 provides UE 201-oriented user plane and control plane protocol terminations. The gNB 203 may be connected to other gNBs 204 via an Xn interface (for example, backhaul). XnAP protocol of Xn interface is used to transmit control plane messages of wireless networks, and user plane protocol of Xn interface is used to transmit user plane data. The gNB 203 may be called a base station, a base transceiver station, a radio base station, a radio transceiver, a transceiver function, a Base Service Set (BSS), an Extended Service Set (ESS), a Transmit-Receive Point (TRP) or some other applicable terms. In NTN network, the gNB 203 may be a satellite, an aircraft or a territorial base station relayed through a satellite. The gNB 203 provides an access point of the 5GC/EPC 210 for the UE 201. Examples of the UE 201 include cellular phones, smart phones, Session Initiation Protocol (SIP) phones, laptop computers, Personal Digital Assistant (PDA), Satellite Radios, Global Positioning Systems (GPSs), multimedia devices, video devices, digital audio players (for example, MP3 players), cameras, game consoles, unmanned aerial vehicles (UAV), aircrafts, narrow-band physical network devices, machine-type communication devices, land vehicles, automobiles, vehicle equipment, On-board communication unit, wearable devices, or any other similar functional devices. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB 203 is connected to the 5GC/EPC 210 via an S1/NG interface. The 5GC/EPC 210 comprises a Mobility Management Entity (MME)/ Authentication Management Field (AMF)/ Session Management Function (SMF) 211, other MMEs/ AMFs/ SMFs 214, a Service Gateway (S-GW)/ User Plane Function (UPF) 212 and a Packet Date Network Gateway (P-GW)/UPF 213. The MME/AMF/SMF 211 is a control node for processing a signaling between the UE 201 and the 5GC/EPC 210. Generally, the MME/AMF/SMF 211 provides bearer and connection management. All user Internet Protocol (IP) packets are transmitted through the S-GW/UPF 212, the S-GW/UPF 212 is connected to the P-GW/UPF 213. The P-GW provides UE IP address allocation and other functions. The P-GW/UPF 213 is connected to the Internet Service 230. The Internet Service 230 comprises IP services corresponding to operators, specifically including Internet, Intranet, IP Multimedia Subsystem (IMS) and Packet Switching Streaming Services (PSS).

In one embodiment, the UE 201 corresponds to the first node in the present application.

In one embodiment, the gNB 203 corresponds to the second node in the present application.

In one embodiment, the gNB 203 is a Marco Cell base station.

In one embodiment, the gNB 203 is a Micro Cell base station.

In one embodiment, the gNB 203 is a Pico Cell base station.

In one embodiment, the gNB 203 is a Femtocell.

In one embodiment, the gNB 203 is a base station that supports large delay differences.

In one embodiment, the gNB 203 is a flight platform.

In one embodiment, the gNB 203 is satellite equipment.

In one embodiment, a radio link between the UE 201 to the gNB 203 is an Uplink.

In one embodiment, a radio link between the gNB 203 to the UE 201 is a Downlink.

In one embodiment, the UE 201 and the gNB 203 are connected via a Uu interface.

### Embodiment 3

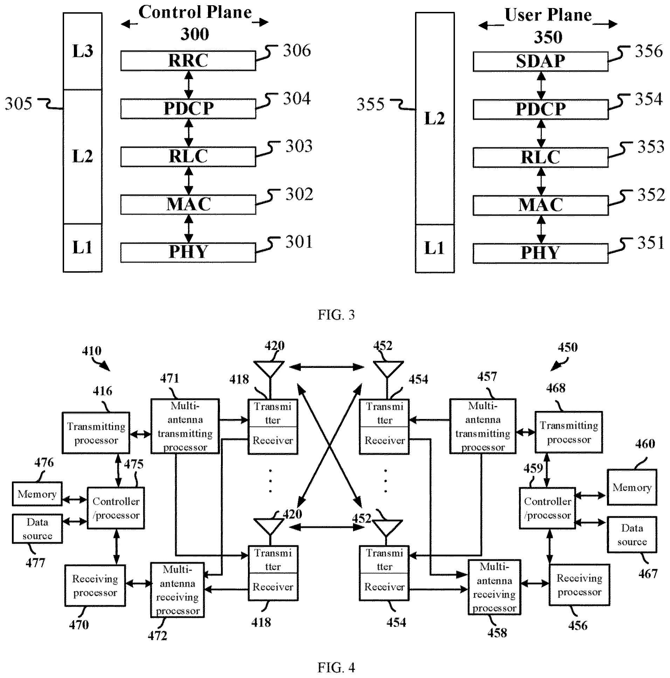

Embodiment 3 illustrates a schematic diagram of a radio protocol architecture of a user plane and a control plane according to one embodiment of the present application, as shown in FIG. 3. FIG. 3 is a schematic diagram illustrating an embodiment of a radio protocol architecture of a user plane 350 and a control plane 300. In FIG. 3, the radio protocol architecture for the control plane 300 of a UE and a gNB is represented by three layers, which are a layer 1, a layer 2 and a layer 3, respectively. The layer 1 (L1) is the lowest layer and performs signal processing functions of various PHY layers. The L1 is called PHY 301 in the present application. The layer 2 (L2) 305 is above the PHY 301, and is in charge of the link between the UE and the gNB via the PHY 301. L2 305 comprises a Medium Access Control (MAC) sublayer 302, a Radio Link Control (RLC) sublayer 303 and a Packet Data Convergence Protocol (PDCP) sublayer 304. All the three sublayers terminate at the gNBs of the network side. The PDCP sublayer 304 provides data encryption and integrity protection and also provides support for a UE handover between gNBs. The RLC sublayer 303 provides segmentation and reassembling of a packet, retransmission of a lost data packet through ARQ, as well as repeat data packet detection and protocol error detection. The MAC sublayer 302 provides mapping between a logic channel and a transport channel and multiplexing of the logical channel ID. The MAC sublayer 302 is also responsible for allocating between UEs various radio resources (i.e., resources block) in a cell. The MAC sublayer 302 is also responsible for Hybrid Automatic Repeat Request (HARQ) operation. The Radio Resource Control (RRC) sublayer 306 in layer 3 (L3) of the control plane 300 is responsible for acquiring radio resources (i.e., radio bearer) and configuring the lower layer with an RRC signaling between the gNB and the UE. The radio protocol architecture of the user plane 350 comprises layer 1 (L1) and layer 2 (L2). In the user plane 350, the radio protocol architecture is almost the same as the corresponding layer and sublayer in the control plane 300 for physical layer 351, PDCP sublayer 354, RLC sublayer 353 and MAC sublayer 352 in L2 layer 355, but the PDCP sublayer 354 also provides a header compression for a higher-layer packet so as to reduce a radio transmission overhead. The L2 layer 355 in the user plane 350 also includes Service Data Adaptation Protocol (SDAP) sublayer 356, which is responsible for the mapping between QoS (Quality of Service) flow and Data Radio Bearer (DRB) to support the diversity of traffic. The radio protocol architecture of the UE in the user plane 350 may comprises part or all of protocol sublayers of the SDAP sublayer 356, the PDCP sublayer 354, the RLC sublayer 353 and the MAC subalyer 352 at L2 layer. Although not described in FIG. 3, the UE may comprise several higher layers above the L2 355, such as a network layer (i.e., IP layer) terminated at a P-GW 213 of the network side and an application layer terminated at the other side of the connection (i.e., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.

In one embodiment, entities of multiple sublayers of the control plane in FIG. 3 form a Signaling Radio Bear (SRB) in the vertical direction.

In one embodiment, entities of multiple sublayers of the user plane in FIG. 3 form a DRB in the vertical direction.

In one embodiment, entities of multiple sublayers of the user plane in FIG. 3 form a multicast MRB in the vertical direction.

In one embodiment, a PDCP sublayer of a control plane in FIG. 3 provides a signaling radio bearer to the RRC sublayer.

In one embodiment, the PDCP sublayer of the user plane in FIG. 3 provides a data radio bearer to the SDAP sublayer.

In one embodiment, the PDCP sublayer of the user plane shown in FIG. 3 provides multimedia broadcast multicast service PTM (Point to Multipoint) radio bearer to the SDAP sublayer.

In one embodiment, the RLC sublayer of the control plane in FIG. 3 provides an RLC bearer to the PDCP sublayer.

In one embodiment, the RLC sublayer of the user plane in FIG. 3 provides an RLC bearer to the PDCP sublayer.

In one embodiment, the RLC sublayer and the MAC sublayer provide data transfer services through a logical channel.

In one embodiment, data transmission services are provided between the PDCP sublayer and the RLC sublayer through an RLC channel.

In one embodiment, the at least one first-type signal in the present application is generated by either the PHY 301 or the PHY 351.

In one embodiment, the first message in the present application is generated by the RRC 306.

In one embodiment, the second message in the present application is generated by the RRC 306.

In one embodiment, the third message in the present application is generated by the RRC 306.

In one embodiment, the data in the present application is generated by the PDCP 304 or PDCP 354.

In one embodiment, the data in the present application is generated by the RLC 303 or the RLC 353.

In one embodiment, the L2 layer 305 belongs to a higher layer.

In one embodiment, the RRC sublayer 306 in the L3 layer belongs to a higher layer.

### Embodiment 4

Embodiment 4 illustrates a schematic diagram of hardware modules of a communication device according to one embodiment of the present application, as shown in FIG. 4. FIG. 4 is a block diagram of a first communication device 450 in communication with a second communication device 410 in an access network.

The first communication device 450 comprises a controller/ processor 459, a memory 460, a data source 467, a transmitting processor 468, a receiving processor 456, a multi-antenna transmitting processor 457, a multi-antenna receiving processor 458, a transmitter/receiver 454 and an antenna 452.

The second communication device 410 comprises a controller/ processor 475, a memory 476, a data source 477, a receiving processor 470, a transmitting processor 416, a multi-antenna receiving processor 472, a multi-antenna transmitting processor 471, a transmitter/ receiver 418 and an antenna 420.

In a transmission from the second communication device 410 to the first communication device 450, at the second communication device 410, an upper layer packet from the core network or an upper layer packet from the data source 477 is provided to the controller/ processor 475. The core network and the data source 477 represents all protocol layers above the L2 layer. The controller/processor 475 provides a function of the L2 layer. In the transmission from the second communication device 410 to the first communication device 450, the controller/ processor 475 provides header compression, encryption, packet segmentation and reordering, and multiplexing between a logical channel and a transport channel, and radio resources allocation for the first communication device 450 based on various priorities. The controller/ processor 475 is also responsible for retransmission of a lost packet and a signaling to the first communication device 450. The transmitting processor 416 and the multi-antenna transmitting processor 471 perform various signal processing functions used for the L1 layer (that is, PHY). The transmitting processor 416 performs coding and interleaving so as to ensure an FEC (Forward Error Correction) at the second communication device 410 side, and the mapping to signal clusters corresponding to each modulation scheme (i.e., BPSK, QPSK, M-PSK, M-QAM, etc.). The multi-antenna transmitting processor 471 performs digital spatial precoding, including codebook-based precoding and non-codebook-based precoding, and beamforming on encoded and modulated symbols to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multi-carrier symbol streams. After that the multi-antenna transmitting processor 471 performs transmission analog precoding/beamforming on the time-domain multi-carrier symbol streams. Each transmitter 418 converts a baseband multicarrier symbol stream provided by the multi-antenna transmitting processor 471 into a radio frequency (RF) stream. Each radio frequency stream is later provided to different antennas 420.

In a transmission from the second communication device 410 to the first communication device 450, at the second communication device 450, each receiver 454 receives a signal via a corresponding antenna 452. Each receiver 454 recovers information modulated to the RF carrier, converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs receiving analog precoding/beamforming on a baseband multicarrier symbol stream from the receiver 454. The receiving processor 456 converts the baseband multicarrier symbol stream after receiving the analog precoding/ beamforming from time domain into frequency domain using FFT. In frequency domain, a physical layer data signal and a reference signal are de-multiplexed by the receiving processor 456, wherein the reference signal is used for channel estimation, while the data signal is subjected to multi-antenna detection in the multi-antenna receiving processor 458 to recover any the first communication device-targeted spatial stream. Symbols on each spatial stream are demodulated and recovered in the receiving processor 456 to generate a soft decision. Then the receiving processor 456 decodes and de-interleaves the soft decision to recover the upper layer data and control signal transmitted on the physical channel by the second communication node 410. Next, the upper layer data and control signal are provided to the controller/processor 459. The controller/processor 459 performs functions of the L2 layer. The controller/processor 459 can be connected to a memory 460 that stores program code and data. The memory 460 can be called a computer readable medium. In a transmission from the second communication device 410 to the first communication device 450, the controller/processor 459 provides multiplexing between a transport channel and a logical channel, packet reassembling, decryption, header decompression, control signal processing so as to recover an upper layer packet from the second communication device 410. The upper layer packet is later provided to all protocol layers above the L2 layer, or various control signals can be provided to the L3 layer for processing.

In a transmission from the first communication device 450 to the second communication device 410, at the second communication device 450, the data source 467 is configured to provide an upper layer packet to the controller/processor 459. The data source 467 represents all protocol layers above the L2 layer. Similar to a transmitting function of the second communication device 410 described in the transmission from the second communication device 410 to the first communication device 450, the controller/processor 459 performs header compression, encryption, packet segmentation and reordering, and multiplexing between a logical channel and a transport channel so as to provide the L2 layer functions used for the user plane and the control plane. The controller/processor 459 is also responsible for retransmission of a lost packet, and a signaling to the second communication device 410. The transmitting processor 468 performs modulation mapping and channel coding. The multi-antenna transmitting processor 457 implements digital multi-antenna spatial precoding, including codebook-based precoding and non-codebook-based precoding, as well as beamforming. Following that, the generated spatial streams are modulated into multicarrier/single-carrier symbol streams by the transmitting processor 468, and then modulated symbol streams are subjected to analog precoding/beamforming in the multi-antenna transmitting processor 457 and provided from the transmitters 454 to each antenna 452. Each transmitter 454 first converts a baseband symbol stream provided by the multi-antenna transmitting processor 457 into a radio frequency symbol stream, and then provides the radio frequency symbol stream to the antenna 452.

In the transmission from the first communication device 450 to the second communication device 410, the function at the second communication device 410 is similar to the receiving function at the first communication device 450 described in the transmission from the second communication device 410 to the first communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and multi-antenna receiving processor 472 collectively provide functions of the L1 layer. The controller/processor 475 provides functions of the L2 layer. The controller/processor 475 can be connected with the memory 476 that stores program code and data. The memory 476 can be called a computer readable medium. In the transmission from the first communication device 450 to the second communication device 410, the controller/processor 475 provides de-multiplexing between a transport channel and a logical channel, packet reassembling, decryption, header decompression, control signal processing so as to recover an upper layer packet from the first communication device 450. The upper layer packet from the controller / processor 475 can be provided to all protocol layers above the core network or the L2 layer, and various control signals can also be provided to the core network or L3 layer for L3 layer processing.

In one embodiment, the first communication device 450 comprises: as a response to any condition in a first condition set being satisfied, transition from RRC_INACTIVE state to a first RRC state; when the first node receives data from a multicast MRB in the RRC_INACTIVE state, receive at least one first-type signal, and each of the at least one first-type signal comprises the data from the multicast MRB; herein, the first condition set is related to whether the first node receives the data from the multicast MRB in the RRC_INACTIVE state; there exists at least one first-type condition belonging to the first condition set only when the first node receives the data from the multicast MRB in the RRC _INACTIVE state.

In one embodiment, the first communication device 450 comprises: a memory that stores a computer readable instruction program. The computer readable instruction program generates an action when executed by at least one processor. The action includes: as a response to any condition in a first condition set being satisfied, transitioning from RRC_INACTIVE state to a first RRC state; when the first node receives data from a multicast MRB in the RRC_INACTIVE state, receiving at least one first-type signal, and each of the at least one first-type signal comprising the data from the multicast MRB; herein, the first condition set is related to whether the first node receives the data from the multicast MRB in the RRC_INACTIVE state; there exists at least one first-type condition belonging to the first condition set only when the first node receives the data from the multicast MRB in the RRC_INACTIVE state.

In one embodiment, the second communication device 410 comprises at least one processor and at least one memory. The at least one memory comprises computer program codes; the at least one memory and the computer program codes are configured to be used in collaboration with the at least one processor, the first communication device 450 at least: transmit at least one first-type signal, each of the at least one first-type signal comprises data from a multicast MRB; herein, as a response to any condition in a first condition set being satisfied, a first node transitions from RRC_INACTIVE state to a first RRC state; the first condition set is related to whether the first node receives the data from the multicast MRB in the RRC_INACTIVE state; there exists at least one first-type condition belonging to the first condition set only when the first node receives the data from the multicast MRB in the RRC INACTIVE state.

In one embodiment, the second communication device 410 comprises a memory that stores a computer readable instruction program. The computer readable instruction program generates an action when executed by at least one processor. The action includes: transmitting at least one first-type signal, each of the at least one first-type signal comprising data from a multicast MRB; herein, as a response to any condition in a first condition set being satisfied, a first node transitions from RRC_INACTIVE state to a first RRC state; the first condition set is related to whether the first node receives the data from the multicast MRB in the RRC_INACTIVE state; there exists at least one first-type condition belonging to the first condition set only when the first node receives the data from the multicast MRB in the RRC INACTIVE state.

In one embodiment, the first communication device 450 corresponds to a first node in the present application.

In one embodiment, the second communication device 410 corresponds to a second node in the present application.

In one embodiment, the first communication device 450 is a UE.

In one embodiment, the second communication device 410 is a base station.

In one embodiment, at least one of the antenna 420, the transmitter 418, the multi-antenna transmitting processor 471, the transmitting processor 416 or the controller/processor 475 is used to transmit a first message in the present application.

In one embodiment, at least one of the antenna 452, the receiver 454, the multi-antenna receiving processor 458, the receiving processor 456 or the controller/processor 459 is used to receive a first message in the present application.

In one embodiment, at least one of the antenna 452, the transmitter 454, the multi-antenna transmitting processor 457, the transmitting processor 468 or the controller/processor 459 is used to transmit a second message in the present application.

In one embodiment, at least one of the antenna 420, the receiver 418, the multi-antenna receiving processor 472, the receiving processor 470 or the controller/ processor 475 is used to receive a second message in the present application.

In one embodiment, at least one of the antenna 452, the transmitter 454, the multi-antenna transmitting processor 457, the transmitting processor 468 or the controller/processor 459 is used to transmit a third message in the present application.

In one embodiment, at least one of the antenna 420, the receiver 418, the multi-antenna receiving processor 472, the receiving processor 470 or the controller/ processor 475 is used to receive a third message in the present application.

In one embodiment, at least one of the antenna 420, the transmitter 418, the multi-antenna transmitting processor 471, the transmitting processor 416 or the controller/processor 475 is used to transmit a first-type signal in the present application.

In one embodiment, at least one of the antenna 452, the receiver 454, the multi-antenna receiving processor 458, the receiving processor 456 or the controller/processor 459 is used to receive a first-type signal in the present application.

### Embodiment 5

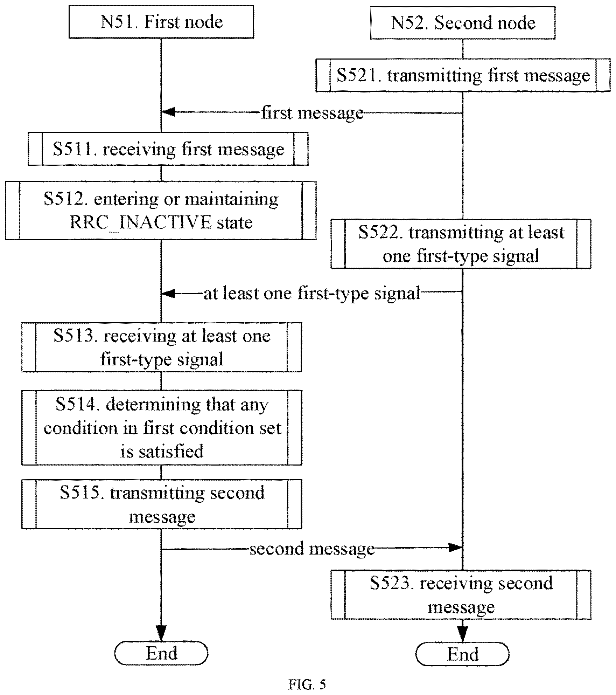

Embodiment 5 illustrates a flowchart of radio signal transmission according to one embodiment in the present application, as shown in FIG. 5. A first node N51 and a second node N52 are in communications via an air interface. It is particularly underlined that the order illustrated in the embodiment does not put constraints over sequences of signal transmissions and implementations.

**The first node N51** receives a first message in step S511; enters or maintains RRC_INACTIVE state in step S512; receives at least one first-type signal in step S513; determines that any condition in a first condition set is satisfied in step S514; transmits a second message in step S515.

**The second node N52** transmits a first message in step S521; transmits at least one first-type signal in step S522; receives a second message in step S523.

In embodiment 5, as a response to any condition in a first condition set being satisfied, transition from RRC_INACTIVE state to a first RRC state; when the first node receives data from a multicast MRB in the RRC_INACTIVE state, receive at least one first-type signal, and each of the at least one first-type signal comprises the data from the multicast MRB; one of the at least one first-type condition is that reception quality of an SSB indicated by a first SSB index is less than a first threshold; herein, the first threshold is fixed, or the first threshold is explicitly indicated by a higher-layer signaling; each of the at least one first-type signal is used to indicate the first SSB index; one of the at least one first-type condition is that a first timer expires at least once; herein, an expiration of the first timer is used to indicate a detection of data reception failure from the multicast MRB; the first timer is maintained at an RLC sublayer of the first node; one of the at least one first-type condition is that a value of a first counter is greater than a second threshold; herein, when a first-type signal is newly transmitted and a TB carried by a closest first-type signal before the first-type signal is successfully decoded, the value of the first counter is set to 0; when a first-type signal is newly transmitted and the TB carried by a closest first-type signal before the first-type signal is not successfully decoded, the value of the first counter is increased by 1; the transitioning to a first RRC state comprises transmitting a second message, the second message being used to request resuming an RRC connection; herein, the first RRC state is the RRC_CONNECTED state; a first RLC bearer associated with the multicast MRB is configured for small data transmission; the second message comprises an RLC control message, and the RLC control message is transmitted through the first RLC bearer; receive a first message, the first message is used to configure at least one radio bearer; as a response to receiving the first message, enter or maintain the RRC_INACTIVE state; herein, the at least one radio bearer comprises the multicast MRB.

In one embodiment, as a response to any condition in a first condition set being satisfied, transition from RRC INACTIVE state to RRC _CONNECTED state.

In one embodiment, the second node is a base station of a serving cell of the first node.

In one embodiment, the second node is a base station of a primary cell (PCell) of the first node.

In one embodiment, the second node is a base station of a secondary cell (SCell) of the first node.

In one embodiment, the first message is used to configure at least one radio bearer, and the at least one radio bearer comprises a multicast MRB.

In one embodiment, the first message is a higher-layer message.

In one embodiment, the first message is an RRC-layer message.

In one embodiment, the first message is an RRCRelease.

In one embodiment, the first message is used to suspend an RRC connection.

In one embodiment, the first message comprises a suspendConfig field.

In one embodiment, the first message is an RRCRelease comprising a suspension configuration.

In one embodiment, when the first message comprises a suspendConfig field, the first message is used to suspend an RRC connection.

In one embodiment, the phrase that the first message is used to configure at least one radio bearer comprises: the first message indicates at least one radio bearer.

In one embodiment, the phrase that the first message is used to configure at least one radio bearer comprises: the first message explicitly indicates at least one radio bearer.

In one embodiment, the phrase that the first message is used to configure at least one radio bearer comprises: the first message implicitly indicates the multicast MRB in at least one radio bearer.

In one embodiment, the phrase that the first message is used to configure at least one radio bearer comprises: the first message explicitly indicates a non-multicast MRB in at least one radio bearer.

In one embodiment, the multicast MRB comprises a DRB or an SRB.

In one embodiment, before receiving the first message, the at least one radio bearer is maintained.

In one embodiment, the first message comprises a multicast MRBList, where the multicast MRBList comprises the multicast MRB; the multicast MRB is enabled to perform reception in the RRC_INACTIVE state.

In one embodiment, the first message comprises an sdt-DRBList, and the sdt-DRBList comprises a DRB enabled for performing small data transmission in the RRC_INACTIVE state.

In one embodiment, the first message comprises configuration information of the multicast MRB.

In one embodiment, as a response to receiving the first message, enter or maintain the RRC INACTIVE state.

In one embodiment, as a response to receiving the first message, enter RRC_INACTIVE state; herein, before receiving the first message, the first node is in RRC _CONNECTED state.

In one embodiment, the first message is transmitted by an upper layer indication of the second node.

In one embodiment, as a response to receiving the first message, maintain RRC_INACTIVE state; herein, before receiving the first message, the first node is in RRC_INACTIVE state.

In one embodiment, the first message is a response to RRCResumeRequest transmitted to the first node.

In one embodiment, the first message is a response to RRCResumeRequest1 transmitted to the first node.

In one embodiment, as a response to receiving the first message, indicate an RRC connection suspension to an upper layer.

In one embodiment, in the RRC_INACTIVE state, the first node monitors a control channel associated with a shared data channel to determine whether data from the at least one radio bearer is scheduled.

In one embodiment, the multicast MRB in the at least one radio bearer is not suspended in the RRC INACTIVE state.

In one embodiment, the multicast MRB in at least one radio bearer is active in the RRC_INACTIVE state.

In one embodiment, one of the at least one first-type condition is that reception quality of an SSB indicated by a first SSB index is less than a first threshold.

In one embodiment, one of the at least one first-type condition is that reception quality of an SSB indicated by a first SSB index is not greater than a first threshold.

In one embodiment, the phrase that reception quality of an SSB indicated by a first SSB index is less than a first threshold comprises: reception quality of an SSB indicated by a first SSB index is less than a first threshold in one measurement.

In one embodiment, the phrase that reception quality of an SSB indicated by a first SSB index is less than a first threshold comprises: reception quality of an SSB indicated by a first SSB index is less than a first threshold in a measurement within a first time length.

In one embodiment, the first time length comprises at least one frame.

In one embodiment, the first time length comprises at least one subframe.

In one embodiment, the first time length comprises at least one slot.

In one embodiment, the phrase that reception quality of an SSB indicated by a first SSB index is less than a first threshold comprises: reception quality of an SSB indicated by a first SSB index is less than a first threshold in continuous Q measurements, where Q is a positive integer not less than 1.

In one embodiment, a time length between two adjacent measurement intervals is the same in the continuous Q measurements, where Q is a positive integer greater than 2.

In one embodiment, the phrase that reception quality of an SSB indicated by a first SSB index is less than a first threshold comprises: reception quality of an SSB indicated by a first SSB index is worse than Qₒᵤₜ for continuous N310 times, and before an expiration of timer T310, the reception quality of an SSB indicated by the first SSB index is better than Qin not for continuous N311 times, and a first threshold is Qₒᵤₜ.

Specifically, in a frame where radio link quality is evaluated, when reception quality of an SSB indicated by a first SSB index is worse than threshold Qₒᵤₜ, the physical layer of the first node indicates out of sync to higher layer of the first node; when timer T310 stops, the out of sync indication is used to increase a value of a second counter by 1; the out of sync indication is used to set a value of a third counter to 0; when the value of the second counter reaches N310, start the timer T310; when the reception quality of an SSB indicated by the first SSB index is better than threshold Qᵢₙ, the physical layer of the first node indicates synchronization to higher layer of the first node; when the timer T310 is running, the synchronization indication is used to increase the value of the third counter by 1; the synchronization indication is used to set the value of the second counter to 0; when the value of the third counter reaches N311, stop the timer T310.

Specifically, when the timer T310 expires, it indicates that reception quality of an SSB indicated by the first SSB index is less than the first threshold.

In the above three embodiments, a value of the N310, a value of the N311, and the expiration value of the timer T310 are fixed or configured by the network.

In the above three embodiments, the second counter, the third counter, and the timer T310 are maintained at an RRC sublayer of the first node.

In the above three embodiments, the second counter is N310, and the third counter is N311.

In one embodiment, the reception quality is represented by RSRP (Reference Signal Received Power).

In one subembodiment of the above embodiment, the first threshold is expressed in w or dBm.

In one embodiment, the reception quality is represented by RSRQ (Reference Signal Received Quality).

In one subembodiment of the above embodiment, the first threshold is represented by dB.

In one embodiment, the reception quality is represented by Block Error Rate (BLER), and the BLER is obtained based on hypothetical PDCCH transmission parameters.

In one embodiment, the first threshold is the threshold Qₒᵤₜ.

In one embodiment, the threshold Qₒᵤₜ is defined as a level at which a downlink radio link cannot be reliably received, and corresponds to 20% BLERₒᵤₜ.

In one embodiment, the threshold Qᵢₙ is defined as a level of downlink radio link quality received with significantly higher reliability than Qₒᵤₜ, and corresponds to 2% BLERᵢₙ.

In one embodiment, the threshold Qᵢₙ and threshold Qₒᵤₜ are respectively based on hypothetical PDCCH transmission parameters.

In one embodiment, downlink radio link quality is monitored according to the method described in section 8.1 in TS38.133 protocol of 3GPP standard.

In one embodiment, the first threshold is fixed.

In one embodiment, the meaning of the fixed is pre-configured.

In one embodiment, the meaning of the fixed is standard-specified.

In one embodiment, the first threshold is explicitly indicated by a higher-layer signaling.

In one embodiment, the higher-layer signaling is an RRC sublayer signaling.

In one embodiment, the first threshold is cell-specific.

In one embodiment, the first threshold is MBS-specific.

In one embodiment, the first threshold is a multicast MRB-specific.

In one embodiment, the first threshold is indicated by an MCCH (MBS Control Channel).

In one embodiment, the first threshold is indicated by a BCCH (Broadcast Control Channel).

In one embodiment, each of the at least one first-type signal is used to indicate the first SSB index.

In one embodiment, each of the at least one first-type signal is associated with an SSB indicated by the first SSB index.

In one embodiment, the phrase that each of the at least one first-type signal is associated with the first SSB comprises: multi-antenna reception parameters of each of the at least one first-type signal are the same as multi-antenna reception parameters of an SSB indicated by the first SSB index.

In one embodiment, the phrase that each of the at least one first-type signal is associated with the first SSB comprises: multi-antenna reception parameters of each of the at least one first-type signal can be used to infer multi-antenna reception parameters of an SSB indicated by the first SSB index.

In one embodiment, the phrase that each of the at least one first-type signal is associated with the first SSB comprises: a reception of each of the at least one first-type signal is used to determine multi-antenna reception parameters of an SSB indicated by the first SSB index.

In one embodiment, the multi-antenna reception parameters comprise a spatial-domain filter.

In one embodiment, the multi-antenna reception parameters comprise spatial correlation parameters.

In one embodiment, the multi-antenna reception parameters comprise QCL (Quasi-CoLocation) parameters.

In one embodiment, the QCL parameters comprise a QCL type.

In one embodiment, the QCL parameters include: at least one of delay spread, Doppler spread, Doppler shift, path loss, average gain, average delay, or spatial Rx parameters.

In one embodiment, the specific meaning of the QCL parameters can be found in section 5.1.5 in 3GPP TS38.214.

In one embodiment, each first-type signal in the at least one first-type signal is scheduled by a first-type signaling; the first-type signaling is used to indicate a TCI (Transmission Configuration Indication) state of a first-type signal, and the TCI state of the first-type signal indicates the first SSB index.

In one embodiment, a first-type signaling is associated with a first-type signal scheduled by the first-type signaling.

In one embodiment, a first-type signaling is not associated with a first-type signal scheduled by the first-type signaling.

In one embodiment, one of the at least one first-type condition is that a first timer expires at least once, and an expiration of the first timer is used to indicate detecting data reception failure from a multicast MRB.

In one embodiment, the multicast MRB is configured to be associated with at least one RLC entity.

In one subembodiment of the above embodiment, one RLC entity in the at least one RLC entity is a UM (Unacknowledged Mode) RLC entity.

In one subembodiment of the above embodiment, one RLC entity in the at least one RLC entity is an AM (Acknowledge Mode) RLC entity.

In one embodiment, the first timer is maintained in an RLC sublayer of the first node.

In one embodiment, the first timer is maintained on a UM RLC entity associated with the multicast MRB.

In one embodiment, the first timer is maintained on an AM RLC entity associated with the multicast MRB.

In one embodiment, when the multicast MRB is associated with two RLC entities, the first timer is a timer maintained by an AM RLC entity in the two RLC entities.

In one embodiment, when the multicast MRB is associated with two RLC entities, the first timer is a timer maintained by a UM RLC entity in the two RLC entities.

In one embodiment, an expiration value of the first timer is configured by the second node.

In one embodiment, the expiration value of the first timer is pre-configured.

In one embodiment, the expiration value of the first timer is fixed.

In one embodiment, the expiration value of the first timer is configurable.

In one embodiment, the phrase that a first timer at least expires once comprises: the first timer expires K times.

In one embodiment, the phrase that a first timer at least expires once comprises: the first timer continuously expires K times.

In one embodiment, the phrase that a first timer at least expires once comprises: when a first timer expires, adding 1 to a value of a fourth counter; when the first timer is stopped and reset before expiration, set a value of the fourth counter to 0; when a value of the fourth counter reaches K, the first timer continuously expires K times.

In one embodiment, K is a positive integer not less than 1.

In one embodiment, K is pre-configured.

In one embodiment, K is fixed.

In one embodiment, K is configured by the second node.

In one embodiment, the first timer is a t-Reassembly timer.

In one embodiment, an expiration of the first timer is used to indicate detecting AMD (AM data) PDU reception failure from a multicast MRB.

In one embodiment, an expiration of the first timer is used to indicate detecting UMD (UM data) PDU reception failure from a multicast MRB.

In one embodiment, when the first timer expires, a status report is triggered on the receiving side of the AM RLC entity associated with the multicast MRB.

In one embodiment, when the first timer is not running and RX_Next_Highest>Rx_Next_Rassembly+1, or when the first timer is not running and RX_Next_Highest=Rx_Next_Rassembly+1 and before a last byte of all received segments in this RLC SDU, there exists at least one missing byte segment of an RLC SDU associated with sequence number RX_Next_Reassembly, start the first timer, and set RX_Timer_Trigger to RX_Next_Highest.

In one embodiment, when the first timer is running and RX_Timer_Trigger <= RX_Next_Reassembly, or, when the first timer is running and RX-Timer-Trigger falls outside a reassembly window and the RX_Timer_Trigger is not equal to RX_Next_Highest, or when the first timer is running and RX_Next_Highest=Rx_Next_Rassembly+1 and before a last byte of all received segments in this RLC SDU, when there exists at least one missing byte segment of an RLC SDU associated with sequence number RX_Next_Reassembly, stop and reset the first timer.

In one embodiment, when the first timer expires, a receiving UM RLC entity updates RX_Next_Reassembly to a first one of SNs (Sequence Numbers)>= RX_Timer_Trigger and has not yet been reassembled; when the first timer expires and RX_Next_Highest > RX _Next_Reassembly + 1, or, when the first timer expires and RX_Next_Highest=Rx_Next_Rassembly+1 and before a last byte of all received segments of this RLC SDU, there exists at least one missing byte segment of an RLC SDU associated with sequence number RX_Next_Reassembly, a receiving UM RLC entity starts the first timer and sets RX_Timer_Trigger to RX_Next_Highest.

In one embodiment, when a UMD PDU with SN=x is placed in receiving cache, a receiving UM RLC entity updates the RX_Next_Reassembly based on x, comprising: if all bytes with SN=x are received and x= RX_Next_Reassembly, update RX_Next_Reassembly to a first one of SNs>current RX_Next_Reassembly and has not been reassembled; if x falls outside a reassembly window, update RX_Next_Highest to x+1; if x falls outside the reassembly window and RX_Next_Reassembly falls outside the reassembly window, update RX_Next_Reassembly to a first one of SNs>=(RX_Next_Highest - UM_Window_Size) and has not been reassembled.

The above four embodiments are applicable to configuring the RLC entity associated with the multicast MRB to work in UM.

In one embodiment, the RX_Next_Highest is a highest receive state variable, and the RX_Next_Highest reserves an SN value after an SN of a UMD PDU with a highest SN among received UMD PDUs.

In one embodiment, the Rx_Next_Rassembly is a UM receive state variable, and the Rx_Next_Rassembly reserves an earliest SN value that is still considered for reassembly.

In one embodiment, the RX_Timer_Trigger is a UM t-reassembly state variable, and the RX_Timer_Trigger reserves an SN value after an SN triggering t-reassembly.

In one embodiment, when the first timer is not running and RX_Next_Highest>Rx_Next +1, or, when the first timer is not running and RX_Next_Highest=Rx_Next +1 and before a last byte of all received segments of this SDU, there exists at least one missing byte segment of an SDU associated with SN = RX_Highest_Status, start the first timer, and set RX_Next_Status_Trigger to RX_Next_Highest.

In one embodiment, when the first timer is running and RX_Next_Status_Trigger = RX_Next, or, when the first timer is running and RX_Next_Status_Trigger= RX_Next+1 and before a last byte of all received segments of this SDU, there exists at least one missing byte segment of an SDU associated with SN = RX_Highest_Status, or when the first timer is running and RX_Next_Status_Trigger falls outside of a reassembly window and the RX_Timer_Trigger is not equal to RX_Next_Highest or, when the first timer is running and RX_Next_Status_Trigger is not equal to RX_Next + AM_ Window_Size, stop and reset the first timer.

In one embodiment, when the first timer expires, the receiving side of an AM RLC entity updates RX_Highest_status to an SN of an RLC SDU with a first one of SNs >= RX_Next_Status_Trigger and not all bytes are received; when the first timer expires and RX_Next_Highest > RX_Highest_Status + 1, or, when the first timer expires and RX_Next_Highest = RX_Next_Highest = RX_Highest_Status + 1 and before a last byte of all received segments of this SDU, there exists at least one missing byte segment of an SDU associated with SN = RX_Highest_Status, start the first timer and set RX_Next_Status_Trigger to RX_Next_Highest.

In one embodiment, when an AMD PDU with SN=x is placed in a receiving cache, the receiving side of an AM RLC entity updates RX_Next_Highest, RX _Highest_Status, and RX_Next based on x, comprising: updating RX_Next_Highest to x+1 if x >= RX_Next_Highest; if all bytes of an RLC SDU with SN = x have been received and x = RX_Highest_Status, update RX_Highest_Status to an SN of an RLC SDU with a first one of SNs > current RX_Highest_Status and not all bytes have been received; if all bytes of an RLC SDU with SN = x have been received and x = RX _Next, update RX_Next to an SN of an RLC SDU with a first one of SNs > current RX_Next and not all bytes have been received.

The above four embodiments are applicable to the RLC entity associated with the multicast MRB being configured to work in AM.

In one embodiment, the RX_Next is a receive status variable, and the RX_Next reserves an SN value after a last sequentially complete received RLC SDU.

In one embodiment, the RX_Next_Status_Trigger is a t-Reassembly status variable, and the RX_Next_Status_Trigger reserves an SN value following an SN of an RLC SDU triggering t-Reassembly.

In one embodiment, the RX_Highest_Status is a maximum STATUS transmit status variable and the RX_Highest_Status reserves a highest possible value of an SN that can be indicated by "ACK_SN" when a STATUS PDU needs to be constructed.

In one embodiment, the RX_Next_Highest is a highest receive state variable, and the RX_Next_Highest reserves an SN value after an SN of an RLC SDU with a highest SN among received RLC SDUs.

In one embodiment, one of the at least one first-type condition is that a value of a first counter is greater than a second threshold; herein, when a TB carried by a first-type signal is successfully decoded, the value of the first counter is set to 0; when the TB carried by a first-type signal is not successfully decoded, the value of the first counter is incremented by 1.

In one embodiment, one of the at least one first-type condition is that a value of a first counter is greater than a second threshold; herein, when a first-type signal is newly transmitted and a TB carried by a closest first-type signal before the first-type signal is successfully decoded, the value of the first counter is set to 0; when a first-type signal is newly transmitted and the TB carried by a closest first-type signal before the first-type signal is not successfully decoded, the value of the first counter is increased by 1.

In one embodiment, the first counter is used to indicate a number of TB(s) continuously not successfully decoded, and the TB is transmitted through the first-type signal.

In one embodiment, the first counter is maintained at the physical layer of the first node.

In one embodiment, the first counter is maintained at the MAC sublayer of the first node.

In one embodiment, the second threshold is fixed.

In one embodiment, the second threshold is pre-configured.

In one embodiment, the second threshold is configured by the second node.

In one embodiment, the second threshold is standard-specified.

In one embodiment, perform decoding on a first-type signal and judge whether decoding is successful based on CRC (Cyclic Redundancy Check) verification.

In one subembodiment of the above embodiment, if CRC verification is failed, a TB carried by the first-type signal is not successfully decoded; and if CRC is passed, the TB carried by the first-type signal is successfully decoded.

In one embodiment, when a TB carried by a first-type signal is received for the first time, the first-type signal is newly transmitted.

In one subembodiment of the above embodiment, the phrase of performing decoding on a first-type signal comprises: when a first-type signal is newly transmitted, performing decoding on the first-type signal; when a first-type signal is retransmitted, perform joint decoding on the first-type signal.

In one embodiment, when an RLC entity associated with the multicast MRB is configured to transmit through Semi-Persistent Scheduling (SPS) radio resources, when a first-type signal is scrambled by G-RNTI (Group-RNTI (Radio Network Temporary Identifier), the first-type signal is newly transmitted; when the first-type signal is addressed to a PDCCH scheduling of a G-CS-RNTI (Group configured scheduling RNTI), the first-type signal is retransmitted; herein, the RLC entity is configured to be transmitted through multicast.

In one embodiment, when an RLC entity associated with the multicast MRB is configured to transmit through Semi-Persistent Scheduling (SPS) radio resources, when a first-type signal is scrambled by a C-RNTI (Cell-RNTI), the first-type signal is newly transmitted; when the first-type signal is addressed to the PDCCH scheduling of a CS-RNTI (Configured Scheduling-RNTI) and an NDI (New Data Indication) comprised in the PDCCH is 1, the first-type signal is retransmitted; herein, the RLC entity is configured to be transmitted through unicast.

In one embodiment, each first-type signal in the at least one first-type signal is scheduled by a first-type signaling; herein, when a first-type signal scheduled by a first-type signaling indication is newly transmitted and a TB carried by a closest first-type signal before the first-type signal is successfully decoded, the value of the first counter is set to 0; when a first-type signal scheduled by a first-type signaling indication is newly transmitted and the TB carried by a closest first-type signal before the first-type signal is not successfully decoded, the value of the first counter is incremented by 1.

In one embodiment, the phrase that a first-type signaling indicates that a scheduled first-type signal is newly transmitted comprises: an NDI comprised in a first-type signaling scheduling a first-type signal is toggled.

In one embodiment, the phrase that an NDI comprised in a first-type signaling scheduling a first-type signal is toggled comprises: an NDI comprised in a first-type signaling scheduling a first-type signal is different from an NDI comprised in a first-type signaling scheduling a closest first-type signal before the first-type signal; herein, a HARQ comprised in a first-type signaling scheduling a first-type signal is the same as a HARQ comprised in a first-type signaling scheduling a closest first-type signal before the first-type signal.

In one embodiment, when an NDI comprised in a first signaling scheduling a first signal is different from an NDI comprised in a second signaling scheduling a second signal, an NDI comprised in the first signaling scheduling the first signal is toggled; herein, a HARQ comprised in the first signaling is the same as a HARQ comprised in the second signaling; the first signaling and the second signaling both belong to the first-type signaling; both the second signal and the second signal belong to the first-type signal; the first signal is the closest first-type signal after the second signal.

In one embodiment, the phrase that a first-type signaling indicates that a scheduled first-type signal is a retransmission comprises: an NDI comprised in a first-type signaling scheduling a first-type signal is not toggled.

In one embodiment, the phrase that an NDI comprised in a first-type signaling scheduling a first-type signal is not toggled comprises: an NDI comprised in a first-type signaling scheduling a first-type signal is the same as an NDI comprised in a first-type signaling scheduling a closest first-type signal before the first-type signal; herein, a HARQ comprised in a first-type signaling scheduling a first-type signal is the same as a HARQ comprised in a first-type signaling scheduling a closest first-type signal before the first-type signal.

In one embodiment, when an NDI comprised in a first signaling scheduling a first signal is the same as an NDI comprised in a second signaling scheduling a second signal, an NDI comprised in the first signaling scheduling the first signal is not toggled; herein, a HARQ comprised in the first signaling is the same as a HARQ comprised in the second signaling; the first signaling and the second signaling both belong to the first-type signaling; both the second signal and the second signal belong to the first-type signal; the first signal is the closest first-type signal after the second signal.

In one embodiment, any first-type signaling is addressed to either a C-RNTI or a CS-RNTI.

In one embodiment, any first-type signaling is addressed to either a G-RNTI or a CS-RNTI.

In one embodiment, the C-RNTI is used to uniquely identify the first node in a serving cell of the first node.

In one embodiment, the CS-RNTI is used to uniquely identify the first node in a serving cell of the first node.

In one embodiment, the G-RNTI is used to uniquely identify an MBS session associated with the multicast MRB in a serving cell of the first node.

In one embodiment, the G-CS-RNTI is used to uniquely identify an MBS session associated with the multicast MRB in a serving cell of the first node.

In one embodiment, the transitioning to a first RRC state comprises transmitting a second message, the second message being used to request resuming an RRC connection; herein, the first RRC state is the RRC_CONNECTED state.

In one embodiment, the second message is a MAC PDU.

In one embodiment, the second message comprises a higher-layer message.

In one embodiment, the second message comprises an RRC message.

In one embodiment, the second message comprises an RRCResumeRequest message.

In one embodiment, the second message comprises an RRCResumeRequest1 message.

In one embodiment, as a response to transmitting the second message, receive RRCResume, and the RRCResume is used to indicate that the first node enters RRC_CONNECTED state.

In one embodiment, after receiving the RRCResume, resume a suspended DRB.

In one embodiment, after receiving the RRCResume, indicate to an upper layer that an suspended RRC connection has been resumed.

In one embodiment, the second message comprises an RLC control message.

In one embodiment, the RLC control message is an RLC status PDU.

In one embodiment, the RLC control message is transmitted through the first RLC bearer associated with the multicast MRB.

In one embodiment, the RLC control message is identified by a first LCID (Logical Channel Identity), and the first LCID is used to identify the first RLC bearer.

In one embodiment, the first RLC bearer is associated to the multicast MRB.

In one embodiment, when a configuration of the first RLC bearer is a lower layer part configuration of the multicast MRB configuration, the first RLC bearer is associated with the multicast MRB.

In one embodiment, when a configuration of the first RLC bearer comprises RLC of the multicast MRB and a configuration of a logical channel, the first RLC bearer is associated with the multicast MRB.

In one embodiment, when a configuration message of the first RLC bearer comprises an identifier of the multicast MRB, the first RLC is associated with the multicast MRB.

In one embodiment, when a servedMBS-RadioBearer field comprised in a configuration message of the first RLC bearer indicates an identifier of the multicast MRB, the first RLC bearer is associated with the multicast MRB.

In one embodiment, when data belonging to the multicast MRB is transmitted through the first RLC bearer, the first RLC bearer is associated with the multicast MRB.

In one embodiment, when a PDCP entity corresponding to the multicast MRB is associated with an RLC entity corresponding to the first RLC bearer, the first RLC bearer is associated with the multicast MRB.

In one embodiment, an RLC entity corresponding to the first RLC bearer is an AM RLC.

In one embodiment, the first message is used to configure a multicast MRB for performing small data transmission in the RRC_INACTIVE state.

In one embodiment, the first message comprises configuration information of an RLC bearer associated with the multicast MRB.

In one embodiment, the first message enables the first RLC bearer associated with the multicast MRB to perform small data transmission in the RRC_INACTIVE state, and the first RLC bearer associated with the multicast MRB corresponds to an AM RLC entity.

In one embodiment, the first message comprises a first list, the first list comprises at least one multicast MRB enabled for performing small data transmission in the RRC_INACTIVE state, and one of the at least one multicast MRB is associated with an AM RLC entity.

In one embodiment, a name of the first list is sdt-multicast MRBList.

In one embodiment, a name of the first list comprises a multicast MRBList.

### Embodiment 6

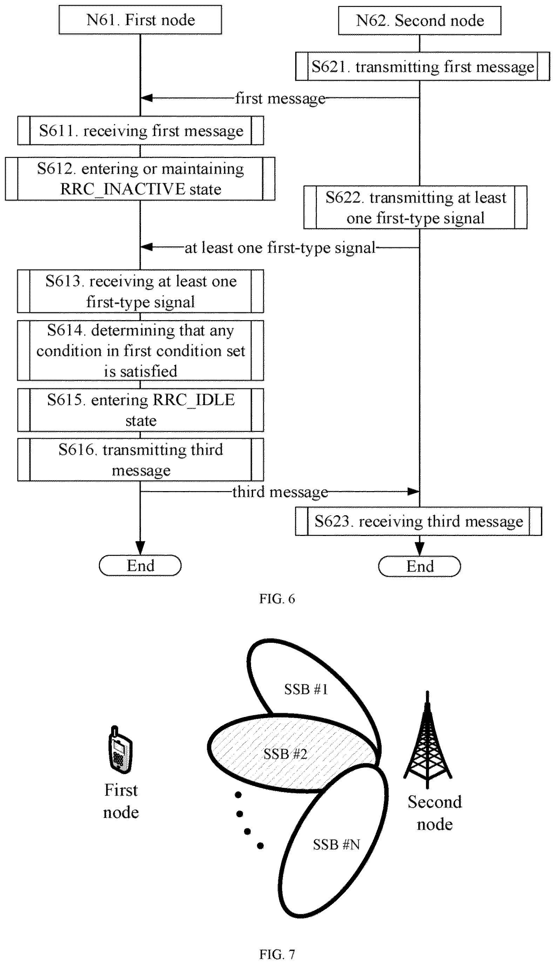

Embodiment 6 illustrates another flowchart of radio signal transmission according to one embodiment in the present application, as shown in FIG. 6. A first node N61 and a second node N62 are in communications via an air interface. It is particularly underlined that the order illustrated in the embodiment does not put constraints over sequences of signal transmissions and implementations.

**The first node N61** receives a first message in step S611; enters or maintains RRC_INACTIVE state in step S612; receives at least one first-type signal in step S613; determines that any condition in a first condition set is satisfied in step S614; enters RRC_IDLE state in step S615; transmits a third message in step S616.

**The second node N62** transmits a first message in step S621; transmits at least one first-type signal in step S622; receives a third message in step S623.

In embodiment 6, as a response to any condition in a first condition set being satisfied, transition from RRC_INACTIVE state to a first RRC state; when the first node receives data from a multicast MRB in the RRC_INACTIVE state, receive at least one first-type signal, and each of the at least one first-type signal comprises the data from the multicast MRB; transmit a third message in RRC_IDLE state, the third message is used to request establishing an RRC connection; herein, the first RRC state is the RRC_IDLE state; receive a first message, the first message is used to configure at least one radio bearer; as a response to receiving the first message, enter or maintain the RRC_INACTIVE state; herein, the at least one radio bearer comprises the multicast MRB.

In one embodiment, as a response to any condition in a first condition set being satisfied, transition from RRC INACTIVE state to RRC_IDLE state.

In one embodiment, a transition from RRC_INACTIVE state to the RRC_IDLE state is implemented by the UE itself.

In one subembodiment of the above embodiment, release configuration information of the multicast MRB.

In one subembodiment of the above embodiment, release suspendConfig.

In one subembodiment of the above embodiment, release the multicast MRB.

In one subembodiment of the above embodiment, release the at least one radio bearer.

In one subembodiment of the above embodiment, indicate an RRC connection release to an upper layer.

In one subembodiment of the above embodiment, drop segments of any segmented RRC message.

In one embodiment, transmit a third message in RRC_IDLE state, the third message is used to request establishing an RRC connection.

In one embodiment, the third message is a higher-layer message.

In one embodiment, the third message is an RRC message.

In one embodiment, the third message is an RRCSetupRequest message.

In one embodiment, the third message indicates the multicast MRB failure.

In one embodiment, the third message indicates radio link failure.

In one embodiment, as a response to transmitting the third message, receive an RRCSetup message, and the RRCSetup message is used to indicate establishing an RRC connection.

### Embodiment 7

Embodiment 7 illustrates a schematic diagram of an SSB index according to one embodiment of the present application, as shown in FIG. 7. In FIG. 7, an ellipse with slash lines represents an SSB indicated by a first SSB index.

In one embodiment, the first node is configured with an SSB index associated with the first-type signal.

In one embodiment, the first node is configured with an SSB index associated with the first-type signaling, and each first-type signaling in the first-type signaling is associated with a first-type signal scheduled by the first-type signaling.

In one embodiment, the first node is configured with an SSB index associated with the first-type signaling, each first-type signaling in the first-type signaling indicates a TCI status of a first-type signal scheduled by the first-type signaling, and the TCI state comprises SSB information.

In one embodiment, an SSB indicated by the first SSB is transmitted through the second node.

In one embodiment, the reception quality of an SSB indicated by the first SSB index is unrelated to an SSB transmitted by a node other than the second node.

In one embodiment, the first SSB index is one of N SSB indexes.

In one embodiment, the first SSB index indicates an SSB reference signal.

In one embodiment, an SSB indicated by the first SSB index is SSB#2.

### Embodiment 8

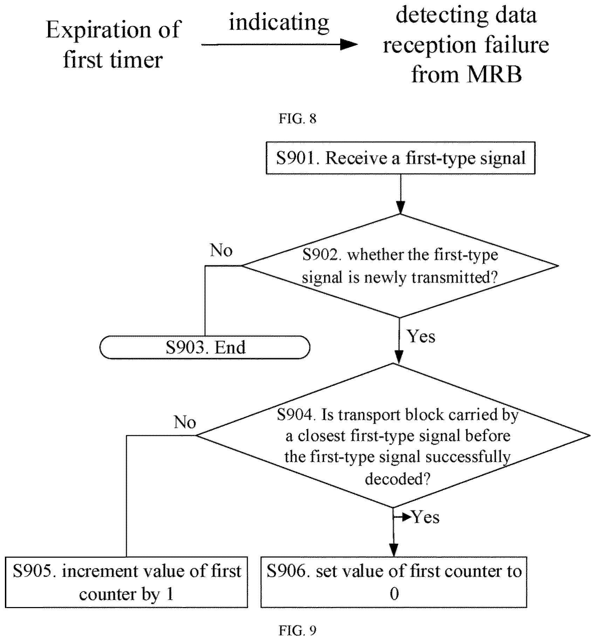

Embodiment 8 illustrates a schematic diagram of a first timer according to one embodiment of the present application, as shown in FIG. 8.

In one embodiment, when the first timer is running, update the first timer in each first timer interval.

In one embodiment, when the first timer stops running, stop updating the first timer in each the first time interval.

In one embodiment, the first time interval is one millisecond.

In one embodiment, the first time interval is one subframe.

In one embodiment, the first time interval is one slot.

In one embodiment, the expiration value of the first timer comprises at least one the first time interval.

In one embodiment, the expiration value of the first timer uses a same unit for measurement as the first time interval.

In one embodiment, when starting the first timer, set a value of the first timer to 0, and the phrase of updating a first timer comprises: incrementing a value of the first timer by 1; when a value of the first timer is the expiration value of the first timer, the first timer is expired.

In one embodiment, when starting the first timer, set a value of the first timer to the expiration value of the first timer, and the phrase of updating the first timer comprises: subtracting a value of the first timer by 1; when a value of the first timer is 0, the first timer expires.

In one embodiment, an expiration of the first timer indicates that the data reception failure from the multicast MRB is detected.

In one embodiment, an expiration of the first timer indicates detecting AMD PDU reception failure; the AMD PDU comprises the data from the multicast MRB.

In one embodiment, an expiration of the first timer indicates detecting UMD PDU reception failure; the UMD PDU comprises the data from the multicast MRB.

### Embodiment 9

Embodiment 9 illustrates a schematic diagram of a running of a first counter according to one embodiment of the present application, as shown in FIG. 9.

In embodiment 9, receive a first-type signal in step S901; judge whether a first-type signal is newly transmitted in step S902, if no, execute step S903 to end; if yes, execute step S904; in step S904, judge whether a TB carried by a closest first-type signal before the first-type signal is successfully decoded, if yes, set a value of a first counter to 0; if no, increment a value of a first counter by 1.

### Embodiment 10

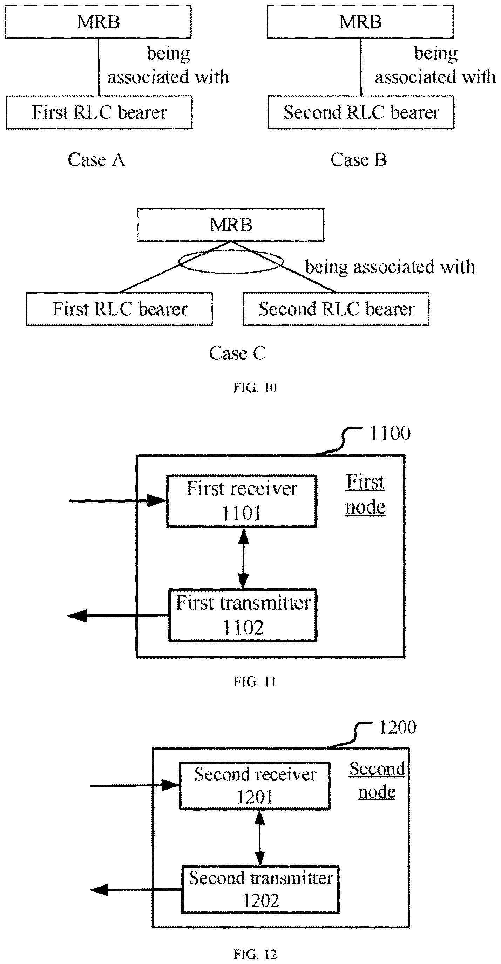

Embodiment 10 illustrates a schematic diagram of a multicast MRB and an RLC bearer associated with the multicast MRB according to one embodiment of the present application, as shown FIG. 10.

In one embodiment, the multicast MRB is only associated with the first RLC bearer.

In one embodiment, the first RLC bearer is a PTP (Point to Point) RLC bearer.

In one embodiment, the first RLC bearer is transmitted through PTP.

In one embodiment, an RLC entity corresponding to the first RLC bearer is configured as AM mode.

In one embodiment, the multicast MRB is only associated with a second RLC bearer.

In one embodiment, the second RLC bearer is a is a PTM (Point to Multipoint) RLC bearer.

In one embodiment, the second RLC bearer is transmitted through PTM.

In one embodiment, an RLC entity corresponding to the second RLC bearer is configured as UM mode.

In one embodiment, the multicast MRB is associated with the first RLC bearer and the second RLC bearer at the same time.

In one embodiment, a PDSCH carrying data from the first RLC bearer is scrambled by a C-RNTI or a CS-RNTI.

In one embodiment, a PDSCH carrying data from the second RLC bearer is scrambled by a G-RNTI or a G-CS-RNTI.

In case A of embodiment 10, the multicast MRB is only associated with the first RLC bearer; in case B of embodiment 10, the multicast MRB is only associated with the second RLC bearer; in case C of embodiment 10, the multicast MRB is associated with the first RLC bearer and the second RLC bearer at the same time.

In one embodiment, when the multicast MRB is only associated with the first RLC bearer, the multicast MRB is a multicast PTP-only multicast MRB.

In one embodiment, when the multicast MRB is only associated with the second RLC bearer, the multicast MRB is a multicast PTM-only multicast MRB.

In one embodiment, when the multicast MRB is associated with the first RLC bearer and the second RLC bearer at the same time, the multicast MRB is a multicast split multicast MRB.

In one embodiment, a TB carried by each first-type signal in the at least one the first-type signal comprises data from the first RLC bearer.

In one embodiment, a TB carried by each first-type signal in the at least one the first-type signal comprises data from the second RLC bearer.

### Embodiment 11

Embodiment 11 illustrates a structure block diagram of a processor in a first node according to one embodiment of the present application, as shown in FIG. 11. In FIG. 11, a processor in a first node 1100 comprises a first receiver 1101 and a first transmitter 1102; the first node 1100 is a UE.

In embodiment 11, the first transmitter 1102, as a response to any condition in a first condition set being satisfied, transitions from RRC_INACTIVE state to a first RRC state; the first receiver 1101, when the first node receives data from a multicast MRB in the RRC_INACTIVE state, receives at least one first-type signal, and each of the at least one first-type signal comprises the data from the multicast MRB; herein, the first condition set is related to whether the first node receives the data from the multicast MRB in the RRC_INACTIVE state; there exists at least one first-type condition belonging to the first condition set only when the first node receives the data from the multicast MRB in the RRC_INACTIVE state.

In one embodiment, one of the at least one first-type condition is that reception quality of an SSB indicated by a first SSB index is less than a first threshold; herein, the first threshold is fixed, or the first threshold is explicitly indicated by a higher-layer signaling; each of the at least one first-type signal is used to indicate the first SSB index.

In one embodiment, one of the at least one first-type condition is that a first timer expires at least once; herein, an expiration of the first timer is used to indicate a detection of data reception failure from the multicast MRB; the first timer is maintained at an RLC sublayer of the first node.

In one embodiment, one of the at least one first-type condition is that a value of a first counter is greater than a second threshold; herein, when a first-type signal is newly transmitted and a TB carried by a closest first-type signal before the first-type signal is successfully decoded, the value of the first counter is set to 0; when a first-type signal is newly transmitted and the TB carried by a closest first-type signal before the first-type signal is not successfully decoded, the value of the first counter is increased by 1.

In one embodiment, the first transmitter 1102, the transitioning to a first RRC state comprises transmitting a second message, and the second message is used to request resuming an RRC connection; herein, the first RRC state is the RRC_CONNECTED state; a first RLC bearer associated with the multicast MRB is configured for small data transmission; the second message comprises an RLC control message, and the RLC control message is transmitted through the first RLC bearer.

In one embodiment, the first transmitter 1102 transmits a third message in RRC_IDLE state, and the third message is used to request establishing an RRC connection; herein, the first RRC state is the RRC_IDLE state.

In one embodiment, the first receiver 1101 receives a first message, and the first message is used to configure at least one radio bearer; as a response to receiving the first message, enters or maintains the RRC_INACTIVE state; herein, the at least one radio bearer comprises the multicast MRB.

In one embodiment, the first receiver 1101 comprises the receiver 454 (including the antenna 452), the receiving processor 456, the multi-antenna receiving processor 458 and the controller/processor 459 in FIG. 4 of the present application.

In one embodiment, the first receiver 1101 comprises at least one of the receiver 454 (including the antenna 452), the receiving processor 456, the multi-antenna receiving processor 458 or the controller/ processor 459 in FIG. 4 of the present application.

In one embodiment, the first transmitter 1102 comprises the transmitter 454 (including the antenna 452), the transmitting processor 468, the multi-antenna transmitting processor 457 and the controller/processor 459 in FIG. 4 of the present application.

In one embodiment, the first transmitter 1102 comprises at least one of the transmitter 454 (including the antenna 452), the transmitting processor 468, the multi-antenna transmitting processor 457 or the controller/processor 459 in FIG. 4 of the present application.

### Embodiment 12

Embodiment 12 illustrates a structure block diagram of a processor in a second node according to one embodiment of the present application, as shown in FIG. 12. In FIG. 12, a processor in a second node 1200 comprises a second receiver 1201 and a second transmitter 1202; the second node 1200 is a base station.

In embodiment 12, the second transmitter 1202 transmits at least one first-type signal, and each of the at least one first-type signal comprises data from a multicast MRB; herein, as a response to any condition in a first condition set being satisfied, a first node transitions from RRC_INACTIVE state to a first RRC state; the first condition set is related to whether the first node receives the data from the multicast MRB in the RRC_INACTIVE state; there exists at least one first-type condition belonging to the first condition set only when the first node receives the data from the multicast MRB in the RRC_INACTIVE state.

In one embodiment, one of the at least one first-type condition is that reception quality of an SSB indicated by a first SSB index is less than a first threshold; herein, the first threshold is fixed, or the first threshold is explicitly indicated by a higher-layer signaling; each of the at least one first-type signal is used to indicate the first SSB index.

In one embodiment, one of the at least one first-type condition is that a first timer expires at least once; herein, an expiration of the first timer is used to indicate a detection of data reception failure from the multicast MRB; the first timer is maintained at an RLC sublayer of the first node.

In one embodiment, one of the at least one first-type condition is that a value of a first counter is greater than a second threshold; herein, when a first-type signal is newly transmitted and a TB carried by a closest first-type signal before the first-type signal is successfully decoded, the value of the first counter is set to 0; when a first-type signal is newly transmitted and the TB carried by a closest first-type signal before the first-type signal is not successfully decoded, the value of the first counter is increased by 1.

In one embodiment, the second receiver 1201 receives a second message, and the second message is used to request resuming an RRC connection; herein, the first RRC state is the RRC_CONNECTED state; a first RLC bearer associated with the multicast MRB is configured for small data transmission; the second message comprises an RLC control message, and the RLC control message is transmitted through the first RLC bearer.

In one embodiment, the second receiver 1201 receives a third message, and the third message is used to request establishing an RRC connection; herein, the first RRC state is the RRC_IDLE state.

In one embodiment, the second transmitter 1202 transmits a first message, and the first message is used to configure at least one radio bearer; herein, as a response to receiving the first message, the first node enters or maintains the RRC_INACTIVE state; the at least one radio bearer comprises the multicast MRB.

In one embodiment, the second receiver 1201 comprises the receiver 418 (including the antenna 420), the receiving processor 470, the multi-antenna receiving processor 472 and the controller/processor 475 in FIG. 4 in the present application.

In one embodiment, the second receiver 1201 comprises at least one of the receiver 418 (including the antenna 420), the receiving processor 470, the multi-antenna receiving processor 472 or the controller/processor 475 in FIG. 4 in the present application.

In one embodiment, the second transmitter 1202 comprises the transmitter 418 (including the antenna 420), the transmitting processor 416, the multi-antenna transmitting processor 471 and controller/processor 475 in FIG. 4 of the present application.

In one embodiment, the second transmitter 1202 comprises at least one of the transmitter 418 (including the antenna 420), the transmitting processor 416, the multi-antenna transmitting processor 471 or the controller/ processor 475 in FIG.4 of the present application.

The ordinary skill in the art may understand that all or part of steps in the above method may be implemented by instructing related hardware through a program. The program may be stored in a computer readable storage medium, for example Read-Only Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. A first-type communication node or a UE or a terminal in the present application includes but not limited to mobile phones, tablet computers, laptops, network cards, low-power devices, enhanced Machine Type Communication (eMTC) devices, NB-IOT devices, vehicle-mounted communication equipment, aircrafts, airplanes, unmanned aerial vehicles (UAV), telecontrolled aircrafts and other wireless communication devices. The second-type communication node or the base station or the network side device in the present application includes but is not limited to the macro-cellular base stations, micro-cellular base stations, home base stations, relay base stations, eNB, gNB, Transmission and Reception Points (TRP), relay satellites, satellite base stations, air base stations, testing equipment, such as transceiver devices that simulate some functions of base stations, signaling testers and other wireless communication equipment.

It will be appreciated by those skilled in the art that this disclosure can be implemented in other designated forms without departing from the core features or fundamental characters thereof. The currently disclosed embodiments, in any case, are therefore to be regarded only in an illustrative, rather than a restrictive sense. The scope of invention shall be determined by the claims attached, rather than according to previous descriptions, and all changes made with equivalent meaning are intended to be included therein.

## Claims

1. A first node for wireless communications, comprising:
a first transmitter, as a response to any condition in a first condition set being satisfied, transitioning from RRC (Radio Resource Control) _INACTIVE state to a first RRC state; and
a first receiver, when the first node receives data from a multicast MRB (MBS Radio Bearer) in the RRC_INACTIVE state, receiving at least one first-type signal, and each of the at least one first-type signal comprising the data from the multicast MRB;
wherein the first condition set is related to whether the first node receives the data from the multicast MRB in the RRC_INACTIVE state; there exists at least one first-type condition belonging to the first condition set only when the first node receives the data from the multicast MRB in the RRC_INACTIVE state.

2. The first node according to claim 1, wherein one of the at least one first-type condition is that reception quality of the SSB indicated by a first SSB index is less than a first threshold;
wherein the first threshold is fixed, or the first threshold is explicitly indicated by a higher-layer signaling; each of the at least one first-type signal is used to indicate the first SSB index.

3. The first node according to claim 1 or 2, wherein one of the at least one first-type condition is that a first timer expires at least once;
wherein an expiration of the first timer is used to indicate a detection of data reception failure from a multicast MRB; the first timer is maintained at RLC sublayer of the first node.

4. The first node according to any of claims 1-3, wherein one of the at least one first-type condition is that a value of a first counter is greater than a second threshold;
wherein when a first-type signal is newly transmitted and a TB (Transport Block) carried by a closest first-type signal before the first-type signal is successfully decoded, the value of the first counter is set to 0; when a first-type signal is newly transmitted and the TB carried by a closest first-type signal before the first-type signal is not successfully decoded, the value of the first counter is incremented by 1.

5. The first node according to any of claims 1-4, comprising:
the first transmitter, the behavior of transitioning to a first RRC state comprises transmitting a second message, the second message being used to request resuming an RRC connection;
wherein the first RRC state is the RRS_CONNECTED state; a first RLC bearer associated with the multicast MRB is configured for small data transmission; the second message comprises an RLC control message, and the RLC control message is transmitted through the first RLC bearer.

6. The first node according to any of claims 1-4, comprising:
the first transmitter, transmitting a third message in RRC_IDLE state, the third message being used to request establishing an RRC connection;
wherein the first RRC state is the RRS_IDLE state;

7. The first node according to any of claims 1-6, comprising:
the first receiver, receiving a first message, the first message being used to configure at least one radio bearer; as a response to receiving the first message, entering or maintaining the RRC_INACTIVE state;
wherein the at least one radio bearer comprises the multicast MRB.

8. A second node for wireless communications, comprising:
a second transmitter, transmitting at least one first-type signal, each of the at least one first-type signal comprising data from a multicast MRB;
wherein as a response to any condition in a first condition set being satisfied, the first node transitions from RRC_INACTIVE state to a first RRC state; the first condition set is related to whether the first node receives the data from the multicast MRB in the RRC_INACTIVE state; there exists at least one first-type condition belonging to the first condition set only when the first node receives the data from the multicast MRB in the RRC_INACTIVE state.

9. A method in a first node for wireless communications, comprising:
as a response to any condition in a first condition set being satisfied, transitioning from RRC_INACTIVE state to a first RRC state; and
when the first node receives data from a multicast MRB in the RRC_INACTIVE state, receiving at least one first-type signal, and each of the at least one first-type signal comprising the data from the multicast MRB;
wherein the first condition set is related to whether the first node receives the data from the multicast MRB in the RRC_INACTIVE state; there exists at least one first-type condition belonging to the first condition set only when the first node receives the data from the multicast MRB in the RRC_INACTIVE state.

10. A method in a second node for wireless communications, comprising:
transmitting at least one first-type signal, each of the at least one first-type signal comprising data from a multicast MRB;
wherein as a response to any condition in a first condition set being satisfied, the first node transitions from RRC_INACTIVE state to a first RRC state; and the first condition set is related to whether the first node receives the data from the multicast MRB in the RRC_INACTIVE state; there exists at least one first-type condition belonging to the first condition set only when the first node receives the data from the multicast MRB in the RRC INACTIVE state.
